# EUROPEAN PATENT APPLICATION

(11) **EP 2 567 851 A1**
(43) Date of publication of application: **13.03.2013**
(21) Application number: 11180222.9
(22) Date of filing: 06.09.2011
(51) Int. Cl.: B60K 31/00, F02M 35/10

(54) **Intake control type speed limiting mechanism**

(71) Applicant: Motive Power Industry Co., Ltd., Dacun Township, Changhua County 515 (TW)
(72) Inventor: Tseng, Kuo-Hua, 542 Nantou County (TW)
(74) Representative: Gervasi, Gemma

(57) **Abstract**

An intake control type speed limiting mechanism is provided between a manifold connected to a carburetor and a reed valve connected to a crankcase, and includes an inverted conic body having an upper opening sized slightly smaller than an outlet of the manifold. The conic body is gradually downward tapered from the upper opening to define at a lower end a lower opening that is much smaller than the upper opening in diameter. And, the conic body and the lower opening thereof are located in the reed valve. With these arrangements, it is able to reduce the intake passage while concentrating and stabilizing the blended air and fuel flow to achieve the effect of limiting vehicle speed.

## Description

### FIELD OF THE INVENTION

The present invention relates to a structure for limiting intake of blended air and fuel, and more particularly to an intake control type speed limiting mechanism capable of reducing an intake passage in a vehicle engine while concentrating and stabilizing the blended air and fuel flow to thereby achieve the effect of limiting vehicle speed.

### BACKGROUND OF THE INVENTION

Cars and motorcycles produced in the last 10 years all have a speed limiting device installed in an engine that does not include any speed limiting mechanism, in order to meet the regulated speed limit. The currently available speed limiting devices can be generally divided into two types, namely, mechanical and electronic types. The mechanical-type speed limiting device can change the engine's intake and exhaust system as well as compression ratio, so as to reduce the engine horsepower and change the transmission (i.e. change the gear ratio and reduction ratio) to achieve the purpose of limiting vehicle speed. On the other hand, the electronic-type speed limiting device utilizes delayed engine ignition angle to cause non-ignition or delayed ignition of an engine at high rotation speed, so as to achieve the purpose of limiting speed.

However, many vehicle environmental protection regulations in the world, such as the 2002 emission standards for MOPED/MOFA (motor bicycle) in the European Union, set rules that are much more strict than before, such that general speed limiting devices can no longer satisfy the environmental protection regulations without scarifying the driving performance. Further, the general speed limiting devices tend to cause intake turbulence and accordingly unsmooth intake that can be experienced by a driver during acceleration.

There is therefore the need to develop an intake control type speed limiting mechanism, which enables a reduced intake passage while concentrating and stabilizing blended air and fuel flow, so as to achieve the effect of limiting vehicle speed.

### SUMMARY OF THE INVENTION

A primary object of the present invention is to provide an intake control type speed limiting mechanism, which enables a reduced intake passage while concentrating and stabilizing blended air and fuel flow to thereby achieve the effect of limiting vehicle speed.

To achieve the above and other objects, the intake control type speed limiting mechanism according to the present invention is provided between a manifold connected to a carburetor and a reed valve connected to a crankcase. The intake control type speed limiting mechanism substantially includes a inverted conic body, which has an upper opening being sized slightly smaller than an outlet of the manifold; and the conic body is gradually downward tapered from the upper opening to define at a lower end a lower opening that is much smaller than the upper opening in diameter. The conic body and the lower opening of the intake control type speed limiting mechanism are located in the reed valve. With these arrangements, the present invention is able to reduce the intake passage while concentrating and stabilizing the blended air and fuel flow to thereby achieve the effect of limiting vehicle speed.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein

Fig. 1 is a perspective view showing an intake control type speed limiting mechanism according to an embodiment of the present invention;

Fig. 2 is a side view showing the present invention; and

Fig. 3 shows the present invention in use.

### DETAILED DESCRIPTION OF THE PREFERRED EMBODIMENTS

The present invention will now be described with a preferred embodiment thereof and with reference to the accompanying drawings.

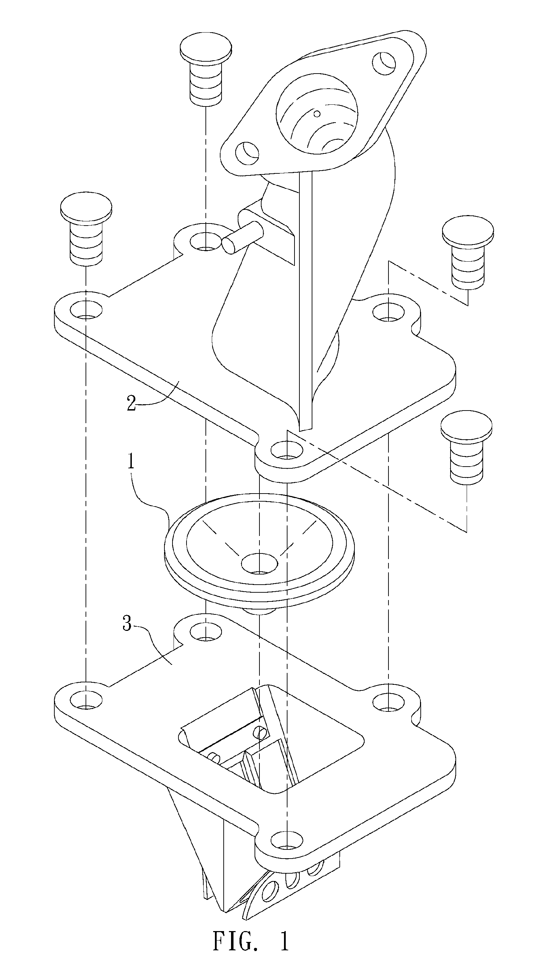

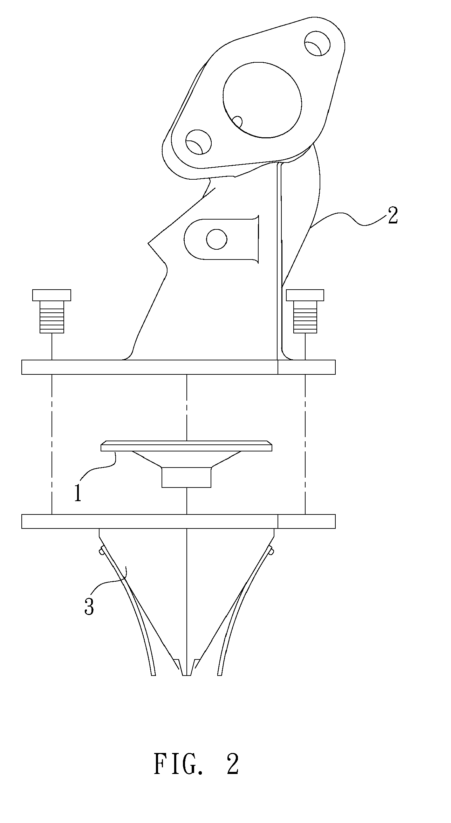

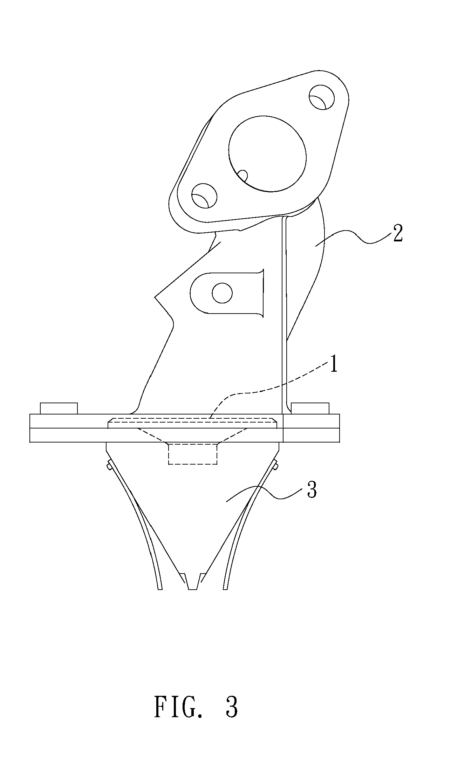

Please refer to Figs. 1 and 2 that are perspective and side views, respectively, showing an intake control type speed limiting mechanism 1 according to an embodiment of the present invention; and to Fig. 3 that shows the present invention in use.

As shown, the intake control type speed limiting mechanism 1 according to the present invention is provided between a manifold 2 connected to a carburetor (not shown) and a reed valve 3 connected to a crankcase (not shown). The intake control type speed limiting mechanism 1 substantially includes a inverted conic body, which has an upper opening being sized slightly smaller than an outlet of the manifold 2; and the conic body is gradually downward tapered from the upper opening to define at a lower end a lower opening that is much smaller than the upper opening in diameter. The conic body and the lower opening thereof are located in the reed valve 3.

With the structural design of the present invention, air and fuel blended in the carburetor and passing through the manifold 2 would then pass through the intake control type speed limiting mechanism 1. With the large upper opening, the gradually downward tapered conic body, and the reduced lower opening of the speed limiting mechanism 1, it is able to effectively control the volume of the blended air and fuel that can flow into the reed valve 3. Due to the special conic shape of the speed limiting mechanism 1, the blended air and fuel can smoothly flow through the reduced intake passage defined by the conic body at a lowered speed. As a result, it is able to effectively control and limit the engine rotation speed to the regulated maximum speed. With these arrangements, the vehicle can be smoothly accelerated in a fuel-efficient manner to reduce vehicle emission and air pollution. In brief, the speed limiting mechanism 1 of the present invention reduces the intake passage while concentrating and stabilizing the blended air and fuel flow to thereby achieve the effect of limiting vehicle speed.

## Claims

1. An intake control type speed limiting mechanism being provided between a manifold (2) connected to a carburetor and a reed valve (3) connected to a crankcase, comprising an inverted conic body having an upper opening sized slightly smaller than an outlet of the manifold (2), the conic body being gradually downward tapered from the upper opening to define at a lower end a lower opening that is much smaller than the upper opening in diameter; and the conic body and the lower opening thereof being located in the reed valve (3).
